# DEMANDE DE BREVET EUROPEEN

(11) **EP 0 754 626 A1**
(43) Date de publication de la demande: **22.01.1997**
(21) Numéro de dépôt: 96401378.3
(22) Date de dépôt: 21.06.1996
(51) Int. Cl.: B64G 9/00, F16B 9/02

(54) **Dispositif de liaison mécanique entre une barre tubulaire et une pièce d'ancrage et son application à une structure de satellite artificiel**

(30) Priorité: 23.06.1995 FR 9507563
(71) Demandeur: AEROSPATIALE Société Nationale Industrielle, 75781 Paris Cédex 16 (FR)
(72) Inventeur: Hubert, Vincent, 06580 Pegomas (FR)
(74) Mandataire: Poulin, Gérard

(57) **Abrégé**

Dans une structure telle qu'une structure de satellite artificiel, les extrémités de barres droites tubulaires (12) sont fixées sur des plateaux (10) par des dispositifs de liaison mécanique rigide (14). Chaque dispositif comprend un embout (16) collé à l'extrémité de la barre et une vis de liaison (18) disposée selon l'axe de la barre et dont une extrémité filetée (20) est vissée dans le plateau (10) ou dans un socle rapporté sur ce plateau. La vis et l'embout peuvent être réalisés d'une seule pièce ou liés directement l'un à l'autre, par exemple par vissage, lorsqu'une démontabilité est désirée.

## Description

### Domaine technique

L'invention concerne principalement un dispositif conçu pour assurer la liaison mécanique entre une extrémité d'une barre droite tubulaire et une pièce d'ancrage telle qu'un plateau ou un socle rapporté sur ce plateau.

L'invention a aussi pour objet une structure de satellite artificiel formée de deux plateaux reliés entre eux de façon rigide par un treillis de barres tubulaires, dans laquelle la liaison mécanique entre les extrémités des barres tubulaires et les plateaux est assurée au moyen de dispositifs conformes à l'invention.

L'invention peut être utilisée dans la réalisation de tout type de structure nécessitant l'accrochage de barres tubulaires sur des pièces d'ancrage. Une application privilégiée concerne la réalisation de structures de satellites artificiels, servant à supporter la charge utile de ces satellites de façon aussi rigide et stable que possible, compte tenu des exigences qui peuvent être appliquées à ces structures (la stabilité dimensionnelle exigée de certaines structures est élevée, de l'ordre de quelques 1/100 mm, ce qui signifie que les dimensions de la structure ne doivent pas varier au cours de la vie du produit, en incluant un éventuel démontage des barres).

### Etat de la technique

Dans la majorité des cas, les liaisons mécaniques rigides entre les barres tubulaires et les plateaux qui constituent la structure des satellites artificiels sont assurées au moyen de dispositifs du type chape-tenon. Plus précisément, une chape est collée à l'extrémité de la barre tubulaire et un tenon est fixé au plateau au moyen de vis. La liaison est complétée par un axe qui traverse à la fois la chape et le tenon, afin de solidariser ces deux pièces.

Lorsque la liaison doit être démontable, l'axe est constitué par un boulon qui traverse la chape et le tenon. Selon les cas, la rigidité de la liaison peut alors être assurée soit en plaçant autour du boulon au moins une douille expansible dont le diamètre augmente lors du serrage, soit par simple pincement du tenon à l'intérieur de la chape sous l'effet du serrage du boulon, soit en prévoyant sur le boulon une partie lisse ajustée dans la chape et dans le tenon, soit enfin en plaçant autour du boulon une douille ajustée dans la chape et dans le tenon.

Les deux dernières solutions, reposant sur un ajustement, ont pour inconvénient qu'il existe toujours un jeu dans l'axe de la barre.

Par ailleurs, la solution consistant à pincer le tenon dans la chape à l'aide d'un boulon procure une rigidité et une stabilité dimensionnelle limitées. En effet, elle repose sur une liaison par frottement qui ne supprime pas totalement les risques de glissement entre les deux pièces.

Enfin, l'utilisation de douilles expansibles se traduit par une incertitude de comportement.

Lorsque la liaison entre la barre et le plateau n'est pas prévue pour être démontable, l'axe peut être constitué par un boulon conique ou cylindrique monté à force dans la chape et dans le tenon.

Cette solution a pour inconvénient de nécessiter un outillage de montage particulier. De plus, lorsqu'un démontage doit être effectué, il nécessite d'avoir recours à des outils spéciaux et impose une reprise d'usinage de la chape et du tenon, du fait de la déformation plastique de la matière produite par l'emmanchement à force.

En outre et de façon essentielle, tous les dispositifs de liaison connus du type chape/tenon présentent une raideur limitée du fait de la longueur des ferrures, d'une flexion des axes et/ou d'une ovalisation des trous dans lesquels ces axes sont reçus. La masse de ces dispositifs est importante et leur usinage est complexe.

Une autre solution connue, particulièrement simple consiste à fixer directement l'extrémité de la barre tubulaire sur le plateau par collage. Toutefois, cette solution est pratiquement inutilisable dès qu'un nombre important de liaisons doit être effectué pour réaliser une structure relativement complexe telle qu'une structure formée d'un treillis de barres interposé entre deux plateaux. De plus, elle est irréparable en cas de rupture accidentelle d'une barre.

### Exposé de l'invention

L'invention a précisément pour objet un dispositif de liaison mécanique rigide permettant de relier l'extrémité d'une barre tubulaire et une pièce d'ancrage de façon relativement simple, avec une rigidité sensiblement plus élevée que les dispositifs de liaison existants, et avec une stabilité dimensionnelle accrue.

Conformément à l'invention, ce résultat est obtenu au moyen d'un dispositif de liaison mécanique rigide entre une extrémité d'une barre tubulaire ayant un axe longitudinal et une pièce d'ancrage, caractérisé par le fait qu'il comprend :
- un embout collé à l'extrémité de la barre ; et
- une vis de liaison comportant une première extrémité filetée vissée dans la pièce d'ancrage et un épaulement, normalement en appui contre une face de la pièce d'ancrage tournée vers l'embout, la vis de liaison reliant directement la pièce à l'embout, selon l'axe longitudinal de la barre.

Dans le cas où la liaison entre la barre tubulaire et la pièce d'ancrage peut être non démontable, l'embout et la vis de liaison sont de préférence réalisés en une seule pièce.

Dans le cas où la liaison doit être démontable, une première forme de réalisation consiste à équiper la vis de liaison d'une deuxième extrémité filetée vissée dans l'embout et supportant un contre-écrou, normalement en appui contre une face de l'embout tournée vers la pièce d'ancrage.

Dans une deuxième forme de réalisation de l'invention adaptée à la réalisation d'une liaison démontable, la vis de liaison traverse librement l'embout et comporte une tête à l'intérieur de la barre tubulaire, la vis de liaison supportant un contre-écrou, normalement en appui contre une face de l'embout tournée vers la pièce d'ancrage. Avantageusement, des rondelles sphériques sont alors interposées entre la tête de la vis de liaison et une face de l'embout tournée vers l'intérieur de la barre tubulaire, ainsi qu'entre le contre-écrou et la face opposée de l'embout.

Selon le cas, la pièce d'ancrage peut être soit un plateau, soit un socle rapporté sur un plateau, par exemple au moyen de vis. Le plateau ou le socle constituant la pièce d'ancrage comporte alors au moins un trou taraudé dans lequel est normalement vissée la première extrémité filetée de la vis de liaison.

Dans une forme de réalisation préférentielle de l'invention, l'embout est collé à l'intérieur de l'extrémité de la barre tubulaire. En variante, l'embout peut aussi comporter une partie tubulaire entourant l'extrémité de la barre tubulaire et collé sur cette dernière.

L'invention concerne également une structure de satellite artificiel, comprenant deux plateaux reliés de façon rigide par des barres tubulaires agencées en treillis, dans laquelle chacune des barres est reliée à chacun des plateaux par un dispositif de liaison conforme à l'invention. Comme sur les dispositifs existants, un jeu est prévu entre chaque barre tubulaire et les embouts, afin de rattraper les défauts d'alignement entre cette barre et les trous taraudés usinés dans les plateaux ou sur les socles. Au montage, ce jeu est rempli de colle.

### Brève description des dessins

On décrira à présent, à titre d'exemples non limitatifs, différentes formes de réalisation de l'invention, en se référant aux dessins annexés, dans lesquels :
- la figure 1 est une vue en perspective représentant une structure de satellite artificiel formée de barres et de plateaux reliés les uns aux autres par des dispositifs de liaison conformes à l'invention ;
- la figure 2 est une vue en coupe partielle, passant par l'axe d'une barre tubulaire de la structure de la figure 1 et illustrant deux variantes de réalisation d'un dispositif de liaison non démontable conforme à l'invention, par lesquelles la barre tubulaire est reliée directement aux plateaux adjacents, sans socle rapporté ;
- la figure 3 est une vue en coupe longitudinale illustrant une première forme de réalisation d'un dispositif de liaison démontable conforme à l'invention ;
- la figure 4 est une vue en coupe longitudinale comparable à la figure 3 illustrant une deuxième forme de réalisation d'un dispositif de liaison non démontable conforme à l'invention ;
- la figure 5 est une vue en perspective représentant en variante le raccordement des extrémités de plusieurs barres tubulaires sur un même socle rapporté sur un plateau, à l'aide de dispositifs de liaison conformes à l'invention ; et
- la figure 6 est une vue en coupe représentant en variante un dispositif de liaison non démontable, de longueur réduite.

### Exposé détaillé de modes de réalisation

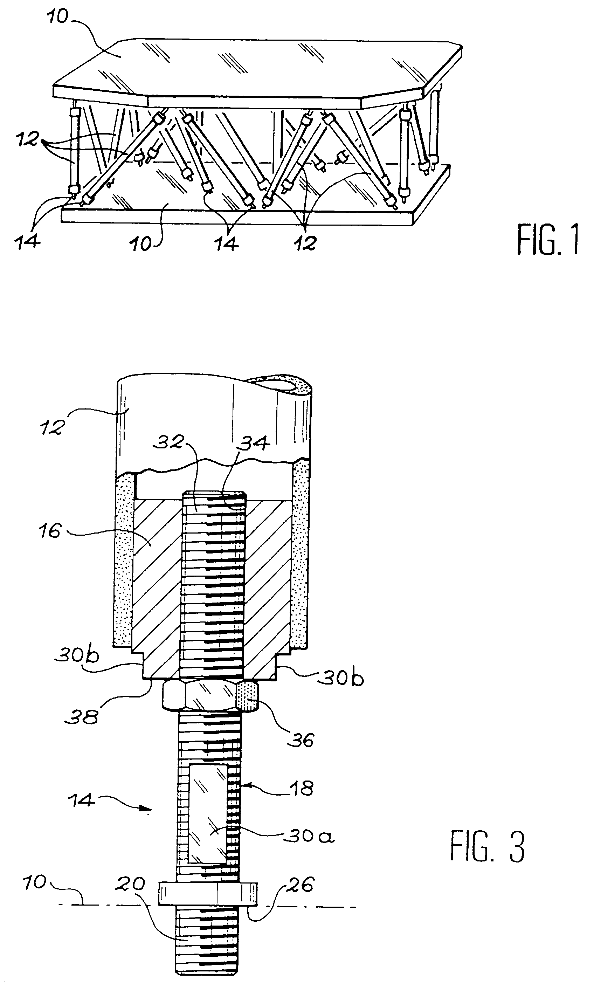

Sur la figure 1, on a représenté une partie de structure de satellite artificiel.

Cette structure se compose principalement de deux plateaux 10, reliés entre eux par des barres droites tubulaires 12 agencées en forme de treillis, de façon à donner à la structure la rigidité requise.

Chacune des extrémités des barres droites tubulaires 12 est fixée sur la face adjacente du plateau 10 correspondant par un dispositif de liaison mécanique rigide 14 dont la réalisation doit permettre de préserver au mieux la rigidité de la structure, sans qu'il puisse s'introduire de micro-déplacements entre les faces des plateaux tournées vers les barres, tout en assurant un montage relativement aisé et en limitant autant que possible le coût de l'ensemble. A ces contraintes générales s'ajoute le fait que certains au moins des dispositifs de liaison 14 doivent être démontables, par exemple pour permettre l'accès à des circuits électroniques qui sont fréquemment placés entre les plateaux 10, lorsque cela est nécessaire au cours de la fabrication du satellite.

L'invention propose de réaliser les dispositifs de liaison 14 d'une manière originale, afin notamment d'accroître la rigidité et la stabilité dimensionnelle de la structure par rapport aux dispositifs de liaison existants, de simplifier l'assemblage, de réduire les coûts et de permettre le démontage lorsque cela est nécessaire.

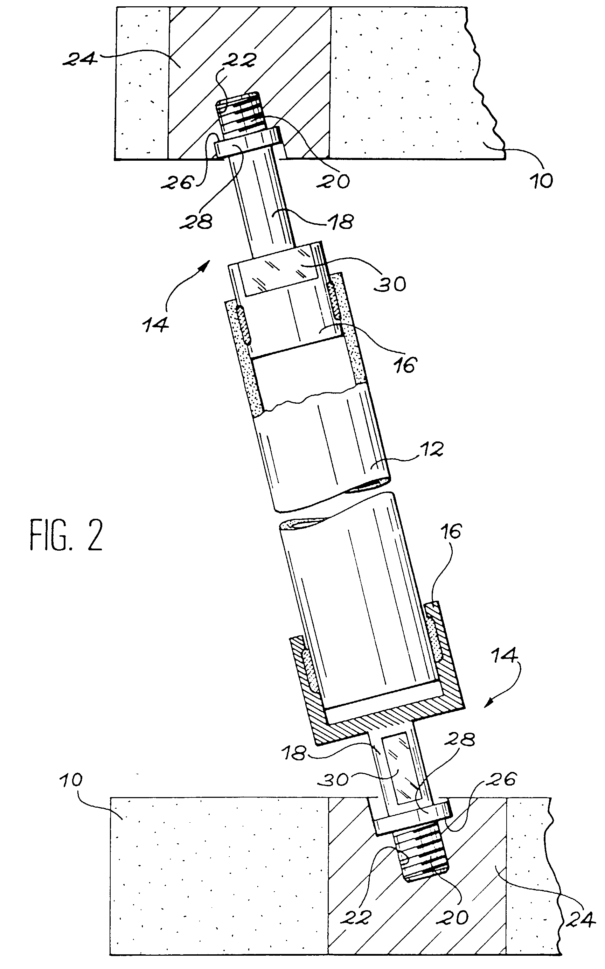

Différentes formes de réalisation des dispositifs de liaison 14 selon l'invention vont à présent être décrites en se référant successivement aux figures 2 à 6.

Sur la figure 2 on a illustré simultanément deux variantes de réalisation du dispositif de liaison 14 selon l'invention, dans le cas où ce dispositif n'a pas besoin d'être démontable. Plus précisément, ces deux variantes ont été représentées aux deux extrémités d'une même barre droite tubulaire 12.

Dans les deux variantes de réalisation illustrées sur la figure 2, le dispositif de liaison mécanique rigide selon l'invention se compose uniquement d'un embout 16 et d'une vis de liaison 18, ces deux éléments étant réalisés en une seule pièce. Plus précisément, l'embout 16 forme une extrémité de la vis de liaison 18, prévue pour être fixée par collage à l'extrémité correspondante de la barre droite tubulaire 12. A partir de cet embout 16, la vis de liaison 18 s'étend vers le plateau 10 correspondant, selon l'axe longitudinal de la barre droite tubulaire 12. A l'opposé de l'embout 16, la vis de liaison 18 comporte une extrémité filetée 20 prévue pour être vissée dans un trou taraudé 22 formé à cet effet dans le plateau 10, dans un insert 24 rapporté dans ce plateau, ou dans un socle (non représenté) rapporté sur ce plateau.

L'extrémité filetée 20 de la vis de liaison 18 est délimitée vers l'embout 16 par un épaulement 26 formé sur une collerette 28 usinée sur la vis de liaison 18. Lorsque l'extrémité filetée 20 de la vis de liaison 18 est vissée dans le trou taraudé 22 du plateau 10, l'épaulement 26 est normalement en appui contre une face du plateau 10 tournée vers l'embout 16. Cette face peut notamment être constituée par un lamage ou un bossage usiné à cet effet à l'entrée du trou taraudé 22.

Pour permettre le vissage de l'extrémité filetée 20 de la vis de liaison 18 dans le trou taraudé 22, des méplats 30 sont formés sur la pièce dans laquelle sont réalisés à la fois l'embout 16 et la vis de liaison 18. Ces méplats 30 peuvent être usinés soit sur l'embout 16, soit sur la vis de liaison 18, comme l'illustrent les deux variantes de réalisation représentées sur la figure 2.

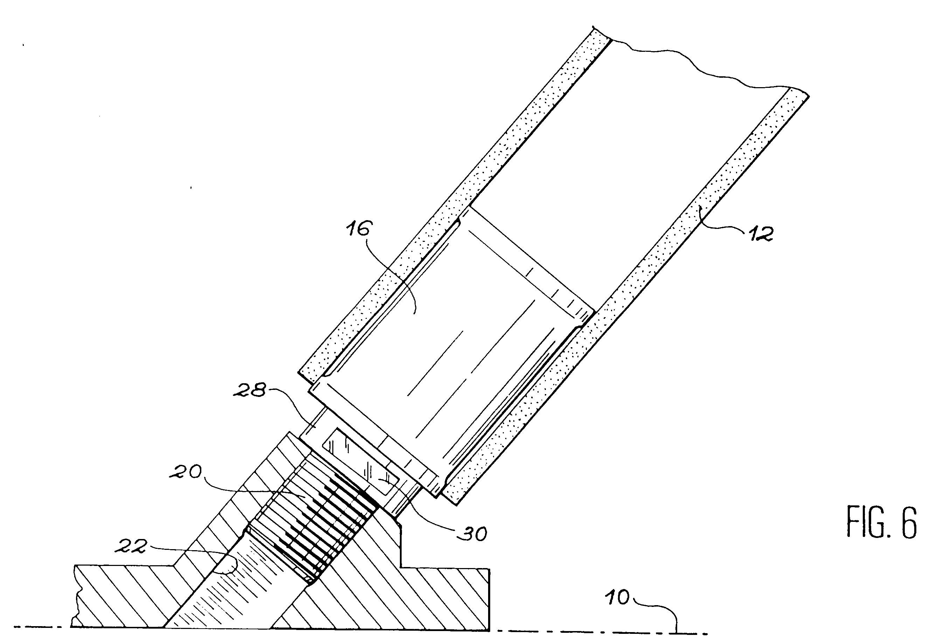

Il est à noter que la longueur de la vis de liaison 18 est adaptée à chaque configuration. Ainsi, comme on l'a illustré sur la figure 6, la vis 18 peut présenter une longueur réduite telle que la collerette 28 soit directement adjacente à l'embout 16, au lieu d'être relié à celui-ci par une partie non filetée de la vis de liaison 18, comme dans les variantes de réalisation représentées sur la figure 2. Les méplats 30 sont alors formés directement sur la collerette 28.

Dans la pratique, le montage s'effectue en vissant l'extrémité filetée 20 dans le trou taraudé 22 jusqu'à la venue en butée de l'épaulement 26 contre la face en vis-à-vis du plateau 10. L'immobilisation relative entre la barre tubulaire 12 et la pièce comprenant l'embout 16 et la vis de liaison 18 est ensuite assurée par collage de l'embout 16 à l'extrémité de la barre 12.

Les deux variantes de réalisation illustrées sur la figure 2 diffèrent essentiellement par la forme de l'embout 16.

Ainsi, dans la variante de réalisation illustrée dans le haut de la figure 2, l'embout 16 présente la forme d'un bouchon cylindrique prévu pour être logé partiellement dans l'extrémité de la barre droite tubulaire 12. Dans ce cas, l'embout 16 est collé directement dans cette extrémité.

Au contraire, dans la variante de réalisation illustrée dans la partie basse de la figure 2, l'embout 16 comporte une partie tubulaire dans laquelle peut venir se loger l'extrémité de la barre tubulaire 12. Dans ce cas, l'embout 16 est collé sur l'extrémité de la barre tubulaire.

Du fait que le dispositif de liaison est centré en totalité selon l'axe longitudinal de la barre tubulaire, les déformations dues à la flexion de l'axe ou à l'usure des trous dans un dispositif existant à chape et tenon sont supprimées. La rigidité et la stabilité dimensionnelle de la liaison et, par conséquent, de l'ensemble de la structure sont ainsi sensiblement augmentées. De plus, la structure du dispositif est particulièrement simple et peu coûteuse, de même que son montage qui permet de reprendre les défauts de positionnement des éléments reliés par le dispositif, sans les contraindre ni les déplacer.

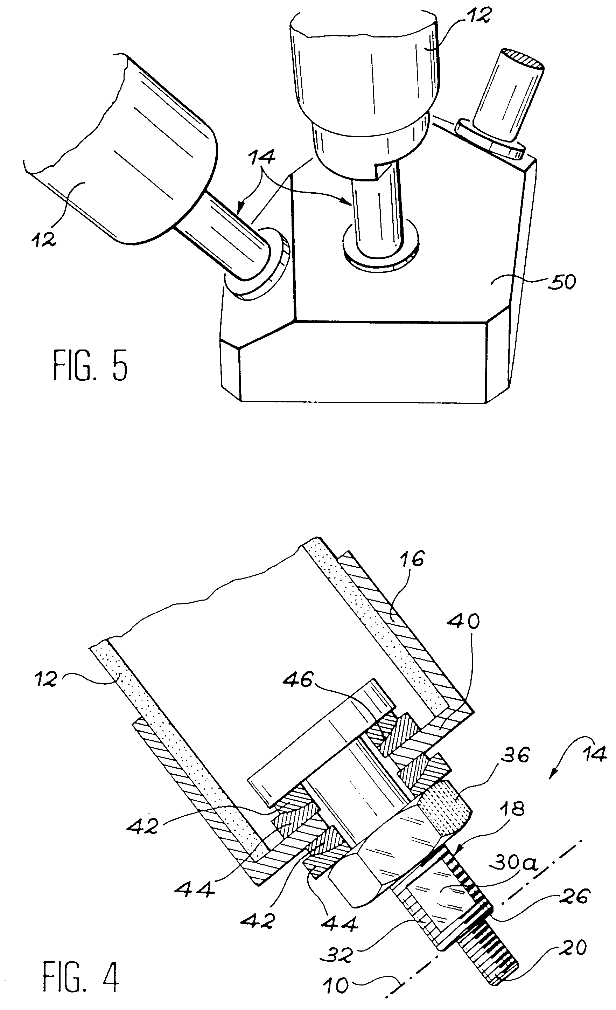

Les figures 3 et 4 représentent respectivement deux formes de réalisation du dispositif de liaison mécanique rigide selon l'invention, dans le cas où ce dispositif doit être démontable.

Dans la forme de réalisation de la figure 3, le dispositif de liaison 14 comporte là encore un embout 16 prévu pour être collé à l'extrémité de la barre 12, ainsi qu'une vis de liaison 18 comportant une extrémité filetée 20 prévue pour être vissée dans un trou taraudé usiné dans le plateau 10. Cependant, au lieu d'être réalisés en une seule pièce comme dans les deux variantes de réalisation illustrées sur la figure 2, l'embout 16 et la vis de liaison 18 forment deux pièces différentes.

De façon plus précise, la vis de liaison 18 comporte dans ce cas une deuxième extrémité filetée 32 prévue pour être vissée dans un trou taraudé 34 usiné à cet effet dans l'embout 16, selon l'axe de ce dernier. De plus, le dispositif de liaison 14 comporte également un contre-écrou 36 prévu pour être vissé sur l'extrémité filetée 32 de la vis de liaison 18 afin d'être amené en appui contre la face 38 de l'embout 16 tournée vers le plateau 10.

Etant donné que l'embout 16 et la vis de liaison 18 constituent deux pièces différentes, il est nécessaire de pouvoir agir séparément sur chacune d'entre elles à l'aide d'une clé pour effectuer le montage. A cet effet, des méplats 30a sont formés sur la vis de liaison 18 et des méplats 30b sont formés sur la partie de l'embout 16 qui fait saillie au-delà de l'extrémité de la barre tubulaire 12.

Par ailleurs, l'extrémité filetée 20 prévue pour être vissée dans le plateau 10 est limitée comme précédemment par un épaulement 26 prévu pour être en appui contre la face du plateau 10 tournée vers la barre tubulaire 12.

Sur la figure 3, on a représenté l'embout 16 sous la forme d'un bouchon cylindrique comme dans la variante illustrée dans le haut de la figure 2. On comprendra aisément qu'on pourrait aussi donner à l'embout 16 la forme décrite en se référant à la partie basse de la figure 2.

Dans la forme de réalisation qui vient d'être décrite en se référant à la figure 3, le dispositif de liaison 14 peut être démonté en dévissant le contre-écrou 36 tout en immobilisant en rotation l'embout 16 et la barre tubulaire 12 collée à cet embout, à l'aide d'une clé placée sur les méplats 30b. Si nécessaire, la vis de liaison 18 peut également être bloquée en rotation à l'aide d'une clé placée sur les méplats 30a.

L'embout 16 et la barre tubulaire 12 qu'il supporte sont alors vissés sur la vis de liaison 18, de façon à rapprocher cet embout du plateau 10. Ce vissage s'accompagne d'un dévissage de l'embout collé à l'extrémité opposée de la barre tubulaire 12, par rapport à l'extrémité filetée 32 de la vis de liaison de l'autre dispositif 14 (non représenté) placé à cette extrémité opposée. La vis de liaison de cet autre dispositif 14 peut alors être démontée en la dévissant de l'autre plateau 10.

Ensuite, l'embout 16 qui reste vissé sur la vis de liaison 18 du premier dispositif 14 est à son tour dévissé en faisant tourner la barre tubulaire 12 en sens inverse. La barre tubulaire 12 équipée de ses deux embouts 16 est alors démontée. Si nécessaire, la vis de liaison 18 du premier dispositif 14 est dévissée du plateau 10 correspondant.

Après desserrage du contre-écrou 36, il est aussi possible de dévisser l'extrémité filetée 20 du plateau 10 au moyen des méplats 30a. Le dispositif s'escamote ainsi à l'intérieur de la barre tubulaire 12 et permet le démontage de celle-ci.

Dans les deux cas, le remontage s'effectue en suivant une séquence inverse de celle qui vient d'être décrite. Un outillage et/ou un marquage vis/plateau permet éventuellement de retrouver la position exacte d'origine des différentes pièces.

En plus des avantages précédemment indiqués dans le cadre des variantes de la figure 2, la forme de réalisation qui vient d'être décrite en se référant à la figure 3 permet donc un démontage et un remontage aisés de la structure.

Sur la figure 4, on a représenté une deuxième forme de réalisation d'un dispositif de liaison mécanique rigide selon l'invention, lorsque ce dispositif doit être démontable. La principale différence avec le premier mode de réalisation décrit en se référant à la figure 3 concerne la prise en compte par le dispositif d'éventuels défauts d'alignement entre la barre tubulaire 12 et l'axe de la vis de liaison 18, lorsque celle-ci est vissée dans le plateau 10. Ce dispositif n'impose pas de repérage si on souhaite un démontage/remontage précis.

De façon plus précise, au lieu d'être vissée directement dans l'embout 16, la vis de liaison 18 traverse librement ce dernier et comporte, à l'intérieur de la barre tubulaire 12, une tête 40. La partie de la vis de liaison 18 située entre la tête 40 et l'épaulement 26 comporte alors un deuxième filetage 32 sur lequel est vissé le contre-écrou 36.

Pour permettre la reprise des défauts d'alignement, deux couples de rondelles sphériques 42 et 44, en appui l'une contre l'autre par une surface sphérique 46 sont interposées, d'une part, entre la tête 40 de la vis de liaison 18 et l'embout 16, à l'intérieur de la barre tubulaire 12 et, d'autre part, entre le contre-écrou 36 et l'embout 16.

Dans cette forme de réalisation, la présence des rondelles 42 et 44, coopérant entre elles par les surfaces sphériques 46, permet au dispositif de liaison 14 de supporter un léger décalage entre l'axe de la barre tubulaire 12 et l'axe de la vis de liaison 18 lorsque le dispositif est assemblé.

Le montage et le démontage du dispositif s'effectue d'une manière similaire à celle qui a été décrite précédemment en se référant à la figure 3. Toutefois, étant donné que la vis de liaison 18 n'est pas vissée dans l'embout 16, les méplats 30b illustrés sur la figure 3 peuvent être supprimés. En revanche, la présence des méplats 30a sur la vis de liaison 18 reste nécessaire à la fois pour immobiliser la vis en rotation lors du serrage du contre-écrou 36 et pour effectuer le dévissage de la vis de liaison 18 par rapport au plateau 10.

Ici encore, l'embout 16 peut prendre l'une ou l'autre des formes qui ont été décrites dans les variantes de réalisation illustrées sur la figure 2.

Il est à noter qu'en variante, le dispositif de liaison 14 peut être réalisé de la manière qui vient d'être décrite en se référant à la figure 4, mais sans les rondelles sphériques 42 et 44. La tête 40 de la vis de liaison 18 et l'écrou 36 sont alors en appui sur l'embout 16.

Jusqu'à présent, tous les dispositifs de liaison décrits ont été assemblés directement aux plateaux 10 par vissage de l'extrémité filetée 20 de la vis de liaison 18 dans un trou taraudé 22 usiné directement dans le plateau ou dans un insert 24 (figure 2) rapporté dans ce dernier.

Dans certains cas, il peut toutefois être nécessaire de ne pas visser directement la vis de liaison 18 dans le plateau 10. Dans ce cas et comme l'illustre la figure 5, on rapporte sur ce plateau 10 un socle 50, par exemple par collage ou vissage. Ce socle 50 peut alors comporter plusieurs trous taraudés dans lesquels sont vissées les extrémités filetées 20 de plusieurs vis de liaison correspondant à différents dispositifs de liaison 14. Ces trous taraudés sont alors formés sur différentes faces du socle 14, perpendiculairement à ces faces, de telle sorte que l'épaulement 26 des vis de liaison 18 correspondantes vienne en appui sur la face appropriée du socle 50.

Dans la pratique, les différentes pièces constituant le dispositif de liaison 14 selon l'invention, c'est-à-dire notamment l'embout 16, la vis de liaison 18 et le contre-écrou 36 lorsqu'il existe sont avantageusement réalisés en alliage de titane ou d'aluminium. Du fait que ces pièces présentent des géométries simples, leur coût de fabrication est sensiblement réduit par rapport à celui des pièces du type tenon et chape utilisées dans les dispositifs classiques. De plus, la masse de matière utilisée est réduite.

## Revendications

1. Dispositif de liaison mécanique rigide entre une extrémité d'une barre tubulaire (12) ayant un axe longitudinal et une pièce d'ancrage (10), caractérisé par le fait qu'il comprend :
- un embout (16), collé à l'extrémité de la barre (12) ; et
- une vis de liaison (18) comportant une première extrémité filetée (20) vissée dans la pièce d'ancrage (10) et un épaulement (26) normalement en appui contre une face de la pièce d'ancrage tournée vers l'embout, la vis de liaison (18) reliant directement la pièce à l'embout (16), selon l'axe longitudinal de la barre (12).

2. Dispositif selon la revendication 1, caractérisé par le fait que l'embout (16) et la vis de liaison (18) sont réalisés en une seule pièce.

3. Dispositif selon la revendication 1, caractérisé par le fait que la vis de liaison (18) comporte une deuxième extrémité filetée vissée dans l'embout (16) et supportant un contre-écrou (36), normalement en appui contre une face de l'embout (16) tournée vers la pièce d'ancrage (10).

4. Dispositif selon la revendication 1, caractérisé par le fait que la vis de liaison (18) traverse librement l'embout (16) et comporte une tête (40), à l'intérieur de la barre tubulaire (12), la vis de liaison supportant un contre-écrou (36), normalement en appui contre une face de l'embout (16) tournée vers la pièce d'ancrage (10).

5. Dispositif selon la revendication 4, caractérisé par le fait que des rondelles sphériques (42,44) sont interposées entre la tête (40) de la vis de liaison (18) et une face de l'embout (16) tournée vers l'intérieur de la barre tubulaire (12), ainsi qu'entre le contre-écrou (36) et la face opposée de l'embout (16).

6. Dispositif selon l'une quelconque des revendications 1 à 5, caractérisé par le fait que la pièce d'ancrage est un plateau (10) comportant au moins un trou taraudé (22) dans lequel est normalement vissée la première extrémité filetée (20) de la vis de liaison (18).

7. Dispositif selon l'une quelconque des revendications 1 à 5, caractérisé par le fait que la piège d'ancrage est un socle (50) rapporté sur un plateau (10) et comportant au moins un trou taraudé dans lequel est normalement vissée la première extrémité filetée (20)de la vis de liaison (18).

8. Dispositif selon l'une quelconque des revendications précédentes, caractérisé par le fait que l'embout (16) est collé à l'intérieur de l'extrémité de la barre tubulaire (12).

9. Structure selon l'une quelconque des revendications 1 à 7, caractérisée par le fait que l'embout (16) est collé à l'extérieur de l'extrémité de la barre tubulaire.

10. Structure de satellite artificiel comprenant deux plateaux (10) reliés de façon rigide par des barres tubulaires (12) agencées en treillis, dans laquelle chacune des barres est reliée à chacun des plateaux par un dispositif de liaison (14) selon l'une quelconque des revendications précédentes.
